**Europäisches Patentamt**

**European Patent Office**

**Office européen des brevets**

(11) Numéro de publication : **0 387 938 B1**

(19)

# (12) FASCICULE DE BREVET EUROPEEN

(45) Date de publication du fascicule du brevet :
**15.09.93 Bulletin 93/37**

(51) Int. Cl.⁵ : **C08F 114/22,** C08F 2/38, C09D 127/16, C08F 14/22

(21) Numéro de dépôt : **90200515.6**

(22) Date de dépôt : **05.03.90**

(54) **Procédé pour la fabrication de polymères du fluorure de vinylidène.**

(30) Priorité : **15.03.89 FR 8903497**

(43) Date de publication de la demande :
**19.09.90 Bulletin 90/38**

(45) Mention de la délivrance du brevet :
**15.09.93 Bulletin 93/37**

(84) Etats contractants désignés :
**AT BE CH DE DK ES FR GB GR IT LI LU NL SE**

(56) Documents cités :
**DE-A- 1 939 852
PATENT ABSTRACTS OF JAPAN vol. 7, no. 155 (C-175)(1300) 07 juillet 1983**

(73) Titulaire : **SOLVAY (Société Anonyme)
Rue du Prince Albert, 33
B-1050 Bruxelles (BE)**

(72) Inventeur : **Bacque, Xavier
Rue Buffon, 32
F-39500 Tavaux (FR)**
Inventeur : **Lasson, Pierre
Rue Gay-Lussac
F-39500 Tavaux (FR)**

(74) Mandataire : **Marckx, Frieda et al
Solvay Département de la Propriété
Industrielle 310, rue de Ransbeek
B-1120 Bruxelles (BE)**

## Description

La présente invention concerne un procédé pour la fabrication de polymères du fluorure de vinylidène.

Il est connu d'utiliser les polymères du fluorure de vinylidène pour la formulation de peintures et d'enduits adhérents, résistant aux agents atmosphériques et à la corrosion et, en particulier, pour la formulation de peintures destinées au prélaquage de tôles métalliques, opération souvent désignée par le vocable anglais "coil coating". Ce type de peintures est généralement appliqué en couche très mince en des épaisseurs ne dépassant pas 20 μm environ. Pour la formulation de telles peintures à base de polymères du fluorure de vinylidène, on fait habituellement appel à des polymères du fluorure de vinylidène obtenus par polymérisation en émulsion aqueuse.

Dans le brevet français FR-A-2056636 au nom de SÜDDEUTSCHE KALKSTICKSTOFF-WERKE AG, on décrit un procédé pour la fabrication de polyfluorure de vinylidène en particules (primaires) fines ayant une dimension moyenne d'environ 0,2 μm convenant pour la formulation de vernis organosols destinés à la protection des métaux. Le procédé en cause consiste à polymériser le fluorure de vinylidène en milieu aqueux, en l'absence d'agent émulsionnant, à l'intervention de peroxydisulfates comme initiateurs. Ce procédé est particulièrement attractif en raison de sa simplicité et du nombre réduit d'ingrédients de polymérisation nécessaires à sa mise en oeuvre (essentiellement de l'eau, du monomère et de l'initiateur hydrosoluble). Il s'est avéré néanmoins que les polyfluorures de vinylidène obtenus suivant le procédé de l'art antérieur précité conduisent à des peintures et enduits dont la brillance est faible. Pour de nombreuses applications dans le domaine des peintures et, en particulier, des peintures pour le prélaquage de tôles métalliques, il est primordial de disposer de peintures à brillance élevée.

La présente invention a pour objet de procurer un procédé perfectionné pour la fabrication de polymères du fluorure de vinylidène utilisables pour la formulation de peintures à brillance améliorée.

A cet effet, la présente invention concerne un procédé pour la fabrication de polymères du fluorure de vinylidène par polymérisation en discontinu du fluorure de vinylidène en milieux aqueux à l'intervention de peroxydisulfates comme initiateurs et en l'absence d'agent émulsionnant, caractérisé en ce qu'on introduit un agent régulateur de chaînes dans la charge aqueuse initiale destinée à la polymérisation, ledit agent régulateur de chaînes étant choisi parmi les acétates d'alkyles dont les groupements alkyles contiennent 1 à 3 atomes de carbone.

A titre d'exemples d'acétates d'alkyles utilisables dans le procédé de l'invention, on peut mentionner les acétates de méthyle, d'éthyle, de propyle et d'isopropyle. Un acétate d'alkyle tout particulièrement préféré est l'acétate d'éthyle.

Il est essentiel, dans le cadre de la présente invention, de mettre en oeuvre la totalité de l'agent régulateur de chaînes dans la charge aqueuse initiale destinée à la polymérisation.

La quantité d'agent régulateur de chaînes à mettre en oeuvre n'est pas particulièrement critique. Elle dépend, bien entendu, du poids moléculaire, et donc de la viscosité intrinsèque, que l'on souhaite conférer au polymère. En général, on utilise d'environ 0,5 à 3 % en poids d'agent régulateur par rapport au monomère mis en oeuvre. A l'intérieur de cette zone de concentrations, la quantité d'agent régulateur sera choisie avantageusement par voie expérimentale en fonction des conditions de polymérisation et du résultat visé. Une zone de concentrations généralement préférée va de 1 à 2 % d'agent régulateur par rapport au monomère mis en oeuvre. Dans cette zone de concentrations, on produit des polyfluorures de vinylidène dont les viscosités intrinsèques, mesurées dans le diméthylformamide à 25°C, sont comprises entre environ 0,12 et 0,005 g/l.

Dans le procédé selon l'invention, la polymérisation est initiée par des initiateurs du type peroxydisulfate. A titre d'exemples de pareils peroxydisulfates, on peut mentionner les peroxydisulfates des métaux alcalins tels que le sodium et le potassium et le peroxydisulfate d'ammonium. De préférence, on utilise le peroxydisulfate d'ammonium.

La quantité d'initiateur mise en oeuvre à la polymérisation peut varier dans certaines limites. Il est néanmoins conseillé d'en utiliser au moins 0,005 g/l de phase aqueuse et pas plus de 0,5 g/l de phase aqueuse. De préférence, la concentration en initiateur est comprise entre environ 0,03 et 0,2 g/l de phase aqueuse. L'initiateur peut être présent en totalité ou pour partie dans la charge aqueuse initiale. Suivant un mode de réalisation préféré de l'invention, la totalité du peroxydisulfate est introduite progressivement dans la charge en cours de polymérisation.

La température de polymérisation n'est pas critique. Néanmoins, elle se situe avantageusement dans l'intervalle de 80 à 95°C environ. Dans la zone de températures précitée, le fluorure de vinylidène se trouve au-dessus de sa température critique (30,1°C), de sorte que la pression opératoire dépend essentiellement de la température et de la quantité de monomère présente dans l'enceinte de polymérisation. Pour des raisons de productivité, la pression de polymérisation se situe avantageusement au-dessus de 20 bars et, de préférence, entre 30 et 45 bars environ. Elle est réglée et maintenue par l'introduction progressive de fluorure de vinylidène.

La quantité totale de fluorure de vinylidène introduite n'excède généralement pas 0,22 partie pour 1 partie en poids d'eau.

Un mode de réalisation préféré du procédé de l'invention consiste donc à introduire la totalité de l'agent régulateur de chaînes (acétate d'alkyle) dans la charge aqueuse initiale destinée à la polymérisation et à introduire progressivement dans la charge en cours de polymérisation l'initiateur et le fluorure de vinylidène, ce dernier étant introduit en quantité suffisante pour maintenir la pression à la valeur choisie.

Par polymérisation du fluorure de vinylidène, on entend désigner dans le cadre de la présente invention l'homopolymérisation du fluorure de vinylidène, ainsi que la copolymérisation de mélanges de monomères à teneur prépondérante, et de préférence supérieure à 85 % molaires, en fluorure de vinylidène, tels que par exemple des mélanges de fluorure de vinylidène et d'autres oléfines fluorées, telles que le fluorure de vinyle, le trifluoréthylène, le chlortrifluoréthylène, le tétrafluoréthylène et l'hexafluorpropylène. On donne néanmoins la préférence à l'homopolymérisation du fluorure de vinylidène.

Le procédé selon l'invention conduit, en fin de polymérisation, à des dispersions aqueuses de polymères du fluorure de vinylidène finement divisées dont les particules primaires, uniformément sphériques, présentent une dimension moyenne d'environ 0,1 à 0,3 $\mu$m. Les polymères du fluorure de vinylidène obtenus selon le procédé de l'invention sont isolés de manière usuelle du milieu de polymérisation et en particulier par coagulation, filtration, lavage et séchage.

En vue de leur utilisation pour la formulation de peintures, les coagulats sons broyés, pendant ou après séchage, de manière à obtenir des polymères du fluorure de vinylidène en particules dont la dimension moyenne est inférieure à 20 $\mu$m.

Les polymères du fluorure de vinylidène obtenus selon le procédé de la présente invention conviennent tout particulièrement pour la formulation de peintures brillantes.

Les formulations pour peintures à base de polyfluorure de vinylidène comprennent habituellement, outre le polyfluorure de vinylidène et des solvants organiques servant de milieu de dispersion (tels que des cétones, des phtalates et des acétates), une résine, telle qu'une résine acrylique, qui soit compatible avec le polyfluorure de vinylidène et plus soluble que le polyfluorure de vinylidène dans lesdits solvants, destinée à améliorer sa dispersion dans la peinture, ainsi que des pigments et des agents tensio-actifs.

Les exemples qui suivent sont destinés à illustrer l'invention.

Les exemples 1 à 3, selon l'invention, illustrent la mise en oeuvre d'acétate d'éthyle comme agent régulateur de chaînes. L'exemple 4, de référence, illustre le procédé de l'art antérieur (sans agent régulateur de chaînes).

Les exemples 1 à 4 sont réalisés selon le mode opératoire général suivant :

Polymérisation

Dans un autoclave en acier inoxydable d'une capacité de 35 litres, on introduit successivement 25 litres d'eau désionisée, puis de l'acétate d'éthyle en des quantités précisées dans le tableau I en annexe. On ferme l'autoclave et on le rince à l'azote. On chauffe le contenu de l'autoclave à 92°C. On injecte du fluorure de vinylidène et on règle le débit de fluorure de vinylidène de manière à instaurer et maintenir une pression de 35 bars dans l'autoclave. On injecte en continu du peroxydisulfate d'ammonium en solution aqueuse à 10 g/l à raison de 77 cm³/heure. Après avoir injecté 5,63 kg de fluorure de vinylidène, on arrête la polymérisation par interruption de l'injection de fluorure de vinylidène et de catalyseur, puis on coupe le chauffage et on dégaze l'autoclave. Le latex (particules primaires, environ 0,2 $\mu$m) est coagulé au chlorure de sodium, filtré, lavé et séché à 60°C. On récupère 5,5 kg de polyfluorure de vinylidène. Le coagulat est broyé de manière à obtenir un polymère dont la dimension moyenne des particules est inférieure à 20 $\mu$m.

Dans le tableau I en annexe sont reprises les viscosités intrinsèques, mesurées dans le diméthylformamide à 25°C, des polyfluorures de vinylidène obtenus selon les exemples 1 à 3. La viscosité intrinsèque du polyfluorure de vinylidène obtenu selon l'exemple 4, de référence, c'est-à-dire en l'absence d'acétate d'alkyle, n'a pu être mesurée faute de solubilité dans le diméthylformamide.

Evaluation

Les polyfluorures de vinylidène obtenus selon les exemples 1 à 4 sont évalués dans une formulation pour peinture blanche dont la composition est décrite ci-dessous :

|  | Parties en poids |
|---|---|
| Résines : polyfluorure de vinylidène | 24,9 |
| résine acrylique | 10,7 |
| Pigment : oxyde de titane | 14,3 |
| Solvants : isophorone | 35,6 |
| phtalate de diéthyle | 6,6 |
| acétate de cellosolve | 5,0 |
| Tensio-actif anionique (*) | 2,9 |

(*) solution à 5 % de matières actives dans le diacetonealcool.

2. Laquage d'une plaque en aluminium

La peinture blanche formulée comme ci-dessus est appliquée sur une plaque en aluminium de 0,6 mm d'épaisseur. Pour favoriser l'adhérence du revêtement en polyfluorure de vinylidène, on applique d'abord une couche de peinture primaire à base de résine phénoxy en une épaisseur de film sec d'environ 5 µm et on durcit le revêtement phénoxy par passage de la plaque dans un four de manière à atteindre une température de 232°C en un laps de temps n'excédant pas la minute (en l'occurrence, 29 sec). La plaque est ensuite retirée du four et plongée immédiatement dans un bain d'eau froide. Après séchage de la plaque refroidie, on applique la peinture blanche au moyen d'une racle à fil de façon à obtenir une épaisseur de film sec de 20 µm et on réticule la peinture par passage de la plaque dans un four de manière à atteindre une température de 254°C en un laps de temps n'excédant pas la minute (en l'occurrence, 34 sec). La plaque est retirée du four et refroidie dans un bain d'eau avant d'être séchée.

3. Mesure de la brillance

La brillance des peintures blanches est mesurée au moyen d'un brillancemètre spéculaire, en conformité avec la norme ISO 2813-1978, l'angle d'incidence du faisceau lumineux étant égal à 60°. Le principe de cette évaluation consiste à rapporter le flux de lumière réfléchi par l'échantillon suivant un angle de 60° au flux de lumière réfléchi par un verre noir poli(indice de réfraction 1,567) auquel est attribué une brillance de 100.

Dans le tableau I en annexe sont repris également les résultats de l'évaluation de la brillance exprimée en % par rapport à la brillance d'un verre noir poli auquel est attribué une brillance de 100.

La comparaison des résultats des exemples 1 à 3, selon l'invention, avec ceux de l'exemple 4, de référence, montre l'amélioration notable de la brillance des peintures formulées avec du polyfluorure de vinylidène fabriqué à l'intervention d'acétate d'éthyle comme agent régulateur de chaînes.

4

## Tableau I

| No. de l'exemple | Quantité d'acétate d'éthyle, g | Viscosité intrinsèque, l/g | Brillance, % |
|---|---|---|---|
| 1 | 56,3 | 0,11 | 72 |
| 2 | 84,5 | 0,08 | 76 |
| 3 | 112,6 | 0,06 | 79 |
| 4 | 0 | – | 48 |

## Revendications

1. Procédé pour la fabrication de polymères du fluorure de vinylidène par polymérisation en discontinu du fluorure de vinylidène en milieu aqueux à l'intervention de peroxydisulfates comme initiateurs et en l'absence d'agent émulsionnant, caractérisé en ce qu'on introduit un agent régulateur de chaînes dans la charge aqueuse initiale destinée à la polymérisation, ledit agent régulateur de chaînes étant choisi parmi les acétates d'alkyles dont les groupements alkyles contiennent de 1 à 3 atomes de carbone.

2. Procédé pour la fabrication de polymères du fluorure de vinylidène suivant la revendication 1, caractérisé en ce que l'acétate d'alkyle est l'acétate d'éthyle.

3. Procédé pour la fabrication de polymères du fluorure de vinylidène suivant les revendications 1 et 2, caractérisé en ce que l'agent régulateur de chaînes est mis en oeuvre à raison de 0,5 à 3 % en poids par rapport au monomère.

4. Procédé pour la fabrication de polymères du fluorure de vinylidène suivant la revendication 3, caractérisé en ce que l'agent régulateur de chaînes est mis en oeuvre à raison de 1 à 2 % en poids par rapport au monomère.

5. Procédé pour la fabrication de polymères du fluorure de vinylidène suivant la revendication 1, caractérisé en ce que l'initiateur est choisi parmi les peroxydisulfates des métaux alcalins et d'ammonium.

6. Procédé pour la fabrication de polymères du fluorure de vinylidène suivant la revendication 5, caractérisé en ce que l'initiateur est le peroxydisulfate d'ammonium.

7. Procédé pour la fabrication de polymères du fluorure de vinylidène suivant les revendications 1, 5 et 6, caractérisé en ce que le catalyseur est mis en oeuvre à raison de 0,005 g à 0,5 gramme par litre de phase aqueuse.

8. Procédé pour la fabrication de polymères du fluorure de vinylidène suivant l'une quelconque des revendications 1 à 7, caractérisé en ce que l'initiateur et le fluorure de vinylidène sont introduits progressivement dans la charge en cours de polymérisation.

## Claims

1. Process for the manufacture of vinylidene fluoride polymers by noncontinuous polymerisation of vinylidene fluoride in an aqueous medium with the use of peroxydisulphates as initiators and in the absence of emulsifying agent, characterised in that a chain-control agent is introduced into the initial aqueous charge intended for the polymerisation, the said chain-control agent being chosen from alkyl acetates whose alkyl groups contain from 1 to 3 carbon atoms.

2. Process for the manufacture of vinylidene fluoride polymers according to Claim 1, characterised in that the alkyl acetate is ethyl acetate.

3. Process for the manufacture of vinylidene fluoride polymers according to Claims 1 and 2, characterised in that the chain-control agent is used in a proportion of 0.5 to 3 % by weight relative to the monomer.

4. Process for the manufacture of vinylidene fluoride polymers according to Claim 3, characterised in that the chain-control agent is used in a proportion of 1 to 2 % by weight relative to the monomer.

5. Process for the manufacture of vinylidene fluoride polymers according to Claim 1, characterised in that the initiator is chosen from alkali metal and ammonium peroxydisulphates.

6. Process for the manufacture of vinylidene fluoride polymers according to Claim 5, characterised in that the initiator is ammonium peroxydisulphate.

7. Process for the manufacture of vinylidene fluoride polymers according to Claims 1, 5 and 6, characterized in that the catalyst is used in a proportion of 0.005 g to 0.5 grams per litre of aqueous phase.

8. Process for the manufacture of vinylidene fluoride polymers according to any one of Claims 1 to 7, characterised in that the initiator and the vinylidene fluoride are introduced progressively into the charge in the course of polymerisation.

**Patentansprüche**

1. Verfahren zur Herstellung von Vinylidenfluoridpolymeren durch diskontinuierliche Polymerisation des Vinylidenfluorids in wässrigem Medium mittels Peroxydisulfaten als Initiatoren und in Abwesenheit eines Emulgators, dadurch gekennzeichnet, daß man ein Kettenregulationsmittel in die für die Polymerisation bestimmte wässrige Ausgangscharge einführt, wobei das Kettenregulationsmittel ausgewählt ist unter den Alkylacetaten, deren Alkylgruppen 1 bis 3 Kohlenstoffatome enthalten.

2. Verfahren zur Herstellung von Vinylidenfluoridpolymeren nach Anspruch 1, dadurch gekennzeichnet, daß das Alkylacetat Ethylacetat ist.

3. Verfahren zur Herstellung von Vinylidenfluoridpolymeren nach den Ansprüchen 1 und 2, dadurch gekennzeichnet, daß das Kettenregulationsmittel eingesetzt wird in einer Menge von 0,5 bis 3 Gew.-% bezogen auf das Monomer.

4. Verfahren zur Herstellung von Vinylidenfluoridpolymeren nach Anspruch 3, dadurch gekennzeichnet, daß das Kettenregulationsmittel eingesetzt wird in einer Menge von 1 bis 2 Gew.-% bezogen auf das Monomer.

5. Verfahren zur Herstellung von Vinylidenfluoridpolymeren nach Anspruch 1, dadurch gekennzeichnet, daß der Initiator ausgewählt ist unter den Alkalimetall- und Ammonium-Peroxydisulfaten.

6. Verfahren zur Herstellung von Vinylidenfluoridpolymeren nach Anspruch 5, dadurch gekennzeichnet, daß der Initiator Ammoniumperoxydisulfat ist.

7. Verfahren zur Herstellung von Vinylidenfluoridpolymeren nach den Ansprüchen 1, 5 und 6, dadurch gekennzeichnet, daß der Katalysator eingesetzt wird in einer Menge von 0,005 g bis 0,5 g pro Liter wässriger Phase.

8. Verfahren zur Herstellung von Vinylidenfluoridpolymeren nach einem der Ansprüche 1 bis 7, dadurch gekennzeichnet, daß der Initiator und das Vinylidenfluorid fortlaufend in die sich in Polymerisation befindliche Charge eingeführt werden.